Europäisches Patentamt

European Patent Office

Office européen des brevets

(19)

(11) Publication number: **0 058 152**
**B1**

(12) **EUROPEAN PATENT SPECIFICATION**

(45) Date of publication of patent specification: **29.08.84**

(51) Int. Cl.³: **B 23 B 51/02, B 23 C 5/10**

(21) Application number: **81900971.3**

(22) Date of filing: **16.04.81**

(86) International application number:
**PCT/GB81/00071**

(87) International publication number:
**WO 81/03137 12.11.81 Gazette 81/27**

(54) **ENGINEERS CUTTING TOOLS.**

(30) Priority: **08.05.80 GB 8015217**

(43) Date of publication of application:
**25.08.82 Bulletin 82/34**

(45) Publication of the grant of the patent:
**29.08.84 Bulletin 84/35**

(84) Designated Contracting States:
**DE FR GB NL SE**

(56) References cited:
**DE-A-2 416 157**
**GB-A- 530 113**
**GB-A- 961 449**
**GB-A-1 161 969**
**GB-A-2 016 316**
**US-A-3 014 386**
**US-A-3 938 231**

(73) Proprietor: **Marwin Cutting Tools Limited**
**Rothley Leicestershire LE7 7QA (GB)**

(72) Inventor: **WALE, Dennis Harry**
**8 Westfield Lane**
**Rothley, Leicesthershire (GB)**

(74) Representative: **SERJEANTS**
**25 The Crescent King Street**
**Leicester, LE1 6RX (GB)**

Courier Press, Leamington Spa, England.

## Description

Technical Field

The invention relates to engineers cutting tools for metal working, which are particularly suitable for use in machine tools in which the tool spindle rotates.

Background Art

Patent Specification GB 1,161,969 (Marwin) shows such a tool in Figure 4 comprising a shank having helical flutes and helical flute face pieces with longitudinal cutting edges.

The Invention

A tool according to the invention is characterised by one of the flute face pieces having a cutting edge extending radially across the axis from a periphery of the tool on one side to a point spaced from the axis on the other.

Such a tool both produces and finishes a hole by cutting, and can also be used for boring spot facing, plunging or ramping in, drilling and reaming, milling, key-seating, and die-sinking, for example. The flute face pieces can automatically be re-ground to shape owing to the flutes being helical and at least one face piece being completely radial. The helical form of the flutes effectively permanently builds in a radial rake from the outside diameter through to the centre at least.

The tool shank is preferably of alloy steel. The flute pieces are preferably of tungsten carbide, ceramic or a specialist cast alloy such as those known by the Trade Marks STELLITE and TANTUNG, or high speed steel and secured in position on the flute faces by welding or brazing. The face pieces may be castellated at least at the tip to help break up the metal chips produced in use, and optionally also to provide coolant channels.

Drawings

Figure 1 is a side view of a tool according to the invention;

Figures 2 to 5 are end views of the tool of Figure 1 and other similar tools;

Figures 6 to 9 are side views of the tips of tools similar to that of Figure 1;

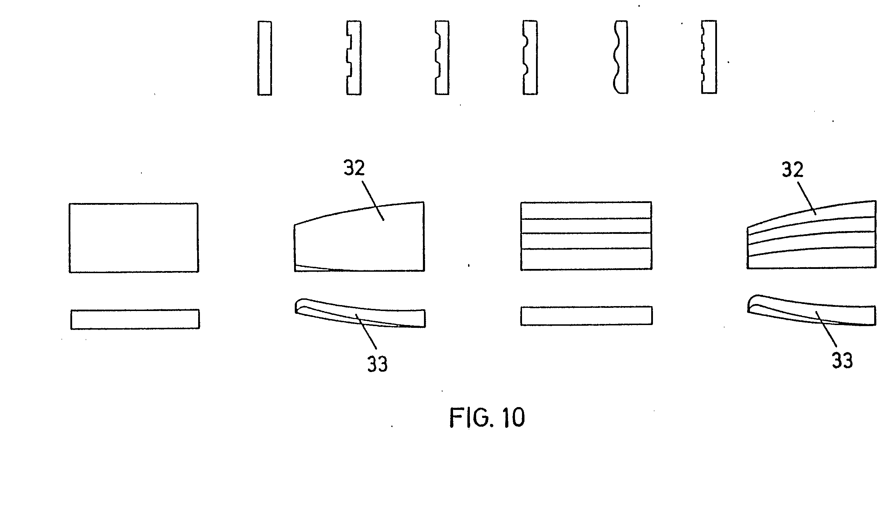

Figure 10 illustrates typical two-flute tip sets for use on tools according to the invention;

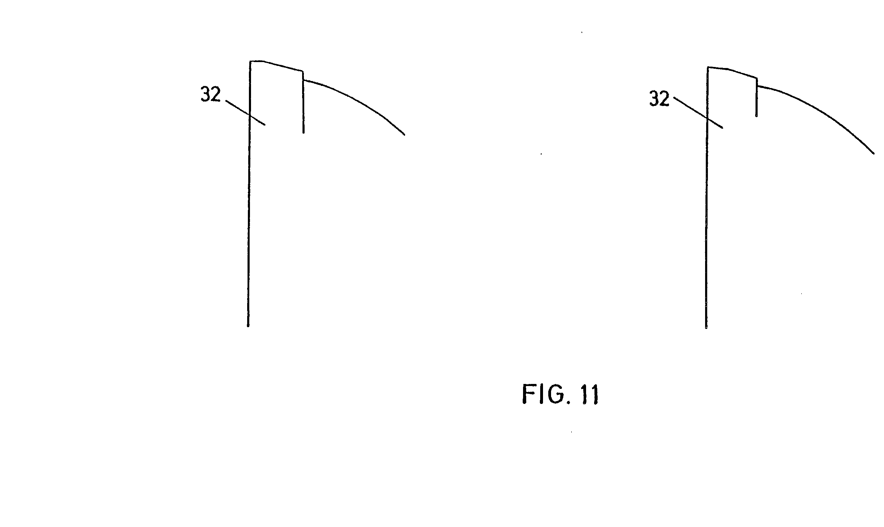

Figure 11 illustrates typical tool periphery geometry; and

Figure 12 shows schematically on an enlarged scale the tip of the tool of Figure 1 advancing into a work piece.

Best Mode

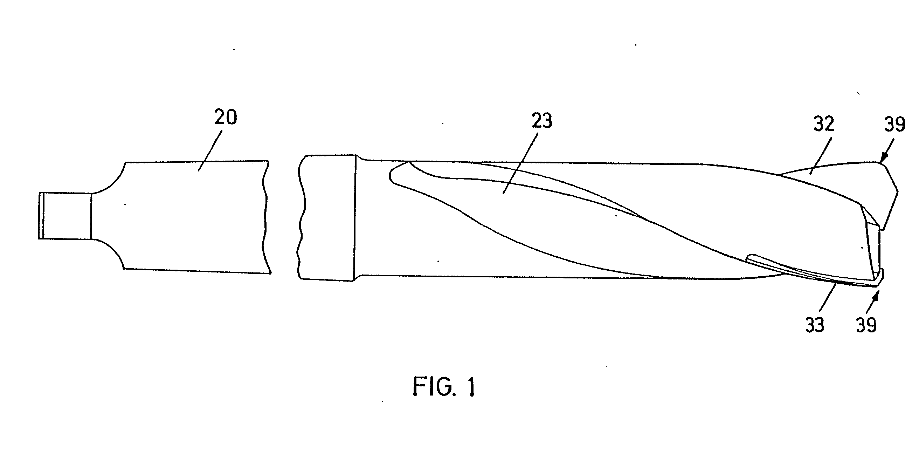

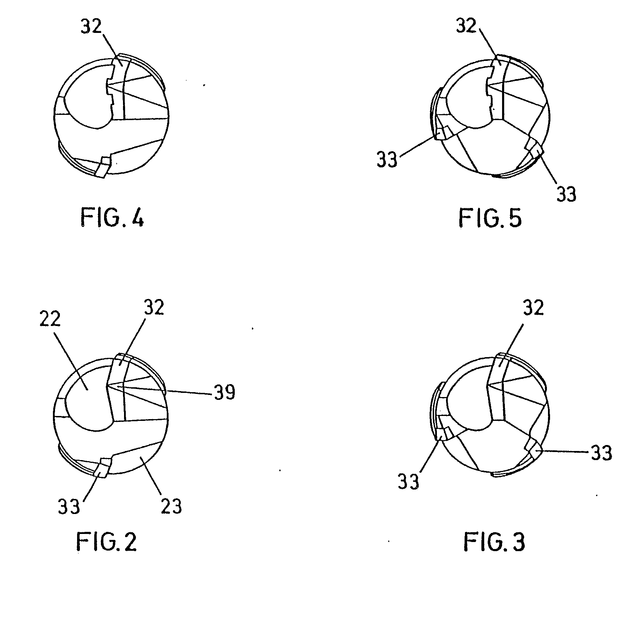

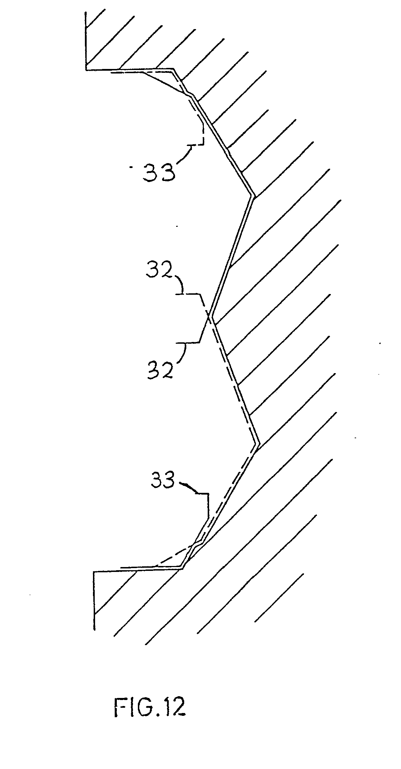

With particular reference to Figure 1, the tool comprises a shank 20 of alloy steel having flutes 22, 23 (Figure 2). The flutes 22, 23 respectively have helical tungsten carbide face pieces 32, 33 brazed thereto. The (larger) flute 22 functions as a roughing flute in drilling and extends radially from a periphery of the tool at the top of Figures 1 and 2 to beyond the axis of the tool (below the centre in Figures 1 and 2). The (smaller) flute 23 is a finishing flute and set behind the roughing flute 22 in the axial direction of the tool advance in drilling as best shown Figure 12. In the upper part of Figure 12, the roughing face piece 32 is shown advancing to the right into a workpiece; in the lower part its position 180° of rotation earlier is shown by a broken line to emphasize the relative (leftward) position of the face piece 33.

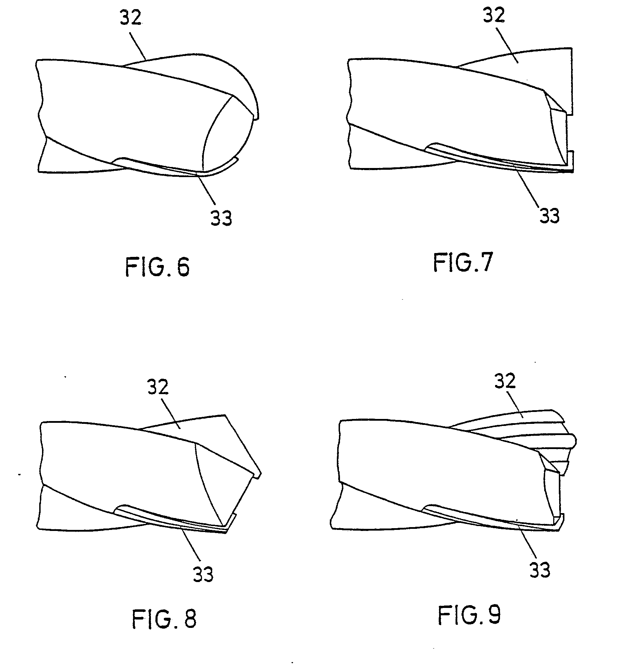

The tips of the tools in Figures 1 to 9 are varied according to the use for which they are intended, that is whether primarily for drilling, traversing, or producing a flat bottomed surface. The corner edges of the face pieces are chamfered as at 39 to produce a size-finished hole due to the relative positions of the ground angles.

The tips in Figures 3 and 5 have a roughing face piece 32 and two finishing face pieces 33, 34 equally spaced radially about the tool axis, and set one behind another in the axial direction of tool advance. The extra finishing flute cuts a smoother internal finish. The tips in Figures 4 and 5 have castellations on the face of the roughing face piece 32.

Claim

An engineers cutting tool for metal working comprising a shank (20) having helical flutes (22, 23) and a helical flute face piece (32, 33) with a longitudinal cutting edge secured to each flute characterised by one of the flute face pieces (32) having a cutting edge extending radially across the axis of the tool from a periphery of the tool on one side to a point spaced from the axis on the other side.

Revendication

Outil tranchant de mécanicien pour le travail des métaux, comprenant un corps généralement cylindrique (20) avec des rainures hélicoïdales (22, 23) et une plaquette de face de rainure (32, 33) à arête coupante longitudinale fixée à chaque hélice, caractérisé en ce que l'une des plaquettes (32) possède une arête coupante s'étandant radialement à travers l'axe de l'outil à partir d'un point de la périphérie d'un côté de l'outil jusqu'à un point espacé de l'axe de l'autre côté.

Patentanspruch

Technisches Schneidwerkzeug zur Metallbearbeitung bestehend aus einem Schaft (2) mit spiralförmigen Nuten (22, 23), wobei an jeder Nute ein spiralförmiges Spanflächenstück (32, 33) mit längsverlaufender Schneidkante befestigt ist, dadurch gekennzeichnet, daß eins der Spannflächenstücke (32) mit einer Schneidkante versehen ist, die sich radial zur Achse des Werkzeuges von einer Umfangsfläche des Werkzeuges auf einer Seite bis zu einem Punkt mit Abstand von der Achse auf der anderen Seite erstreckt.

FIG. 1

FIG. 4

FIG. 5

FIG. 2

FIG. 3

FIG. 6

FIG. 7

FIG. 8

FIG. 9

FIG. 10

32

32

FIG. 11

FIG.12